# EUROPEAN PATENT APPLICATION

(11) **EP 4 383 815 A1**
(43) Date of publication of application: **12.06.2024**
(21) Application number: 22852247.0
(22) Date of filing: 03.08.2022
(51) Int. Cl.: H04W 36/00

(54) **LOW MOBILITY STATE DETERMINATION METHOD AND APPARATUS, TERMINAL, AND NETWORK SIDE DEVICE**

(30) Priority: 06.08.2021 CN 202110904341
(71) Applicant: VIVO MOBILE COMMUNICATION CO., LTD., Dongguan, Guangdong 523863 (CN)
(72) Inventor: SUN, Yanliang, Dongguan, Guangdong 523863 (CN); PAN, Xueming, Dongguan, Guangdong 523863 (CN); CHEN, Li, Dongguan, Guangdong 523863 (CN); BAO, Wei, Dongguan, Guangdong 523863 (CN); YANG, Qian, Dongguan, Guangdong 523863 (CN)
(74) Representative: Lavoix
(86) International application number: PCT/CN2022/109996
(87) International publication number: WO 2023/011535

(57) **Abstract**

This application discloses a method and an apparatus for determining a low mobility state, a terminal, and a network-side device, and pertains to the field of communication technologies. The method for determining a low mobility state in embodiments of this application includes: in a case that a terminal is configured with multiple serving cells, obtaining, by the terminal, a measurement result of a first serving cell of the multiple serving cells, where the first serving cell is one of the multiple serving cells; and determining, by the terminal based on the measurement result, whether the terminal is in a low mobility state.

## Description

### CROSS-REFERENCE TO RELATED APPLICATIONS

This application claims priority to Chinese Patent Application No. 202110904341.1, filed on August 6, 2021 and entitled "METHOD AND APPARATUS FOR DETERMINING LOW MOBILITY STATE, TERMINAL, AND NETWORK-SIDE DEVICE", which is incorporated herein by reference in its entirety.

### TECHNICAL FIELD

This application pertains to the field of communication technologies, and specifically relates to a method and an apparatus for determining a low mobility state, a terminal, and a network-side device.

### BACKGROUND

In existing mobile communication systems, in order to save power, terminals such as narrow band internet of things (Narrow Band Internet of Things, NB-IoT) terminals may not perform measurement on intra- or inter-frequency neighboring cells if measurement values of serving cells meet a measurement relaxation criterion. Generally, to determine whether the measurement relaxation criterion is met, it is necessary to determine whether a terminal is in a low mobility state.

For a terminal in an idle state, determining whether the terminal is in a low mobility state requires considering only its current camp cell. However, in other scenarios, such as carrier aggregation (Carrier aggregation, CA) or dual connectivity (Dual connectivity, DC) scenarios, a terminal may be configured to be connected to multiple serving cells. In this case, the terminal is in a connected state. Therefore, there is an urgent need for those skilled in the art to develop a solution for determining whether a terminal is in a low mobility state in a case that the terminal is configured with multiple serving cells.

### SUMMARY

Embodiments of this application provide a method and an apparatus for determining a low mobility state, a terminal, and a network-side device, so as to determine whether a terminal is in a low mobility state in a case that the terminal is configured with multiple serving cells.

According to a first aspect, a method for determining a low mobility state is provided and applied to a terminal. The method includes:
in a case that a terminal is configured with multiple serving cells, obtaining, by the terminal, a measurement result of a first serving cell, where the first serving cell is one of the multiple serving cells; and
determining, by the terminal based on the measurement result, whether the terminal is in a low mobility state.

According to a second aspect, a method for determining a low mobility state is provided and applied to a network-side device. The method includes:
configuring, by a network-side device, a low mobility state determining criterion for a terminal; and
receiving, by the network-side device, first indication information from the terminal, where the first indication information is used to indicate whether the terminal is in a low mobility state, the low mobility state is determined by the terminal based on a measurement result of a first serving cell and the low mobility state determining criterion, and the first serving cell is one of multiple serving cells configured for the terminal.

According to a third aspect, an apparatus for determining a low mobility state is provided, including:
an obtaining module configured to: in a case that a terminal is configured with multiple serving cells, obtain a measurement result of a first serving cell, where the first serving cell is one of the multiple serving cells; and
a processing module configured to determine, based on the measurement result, whether the terminal is in a low mobility state.

According to a fourth aspect, an apparatus for determining a low mobility state is provided, including:
a configuration module configured to configure a configuration manner of low mobility state determining criterion for a terminal; and
a receiving module configured to receive first indication information from the terminal, where the first indication information is used to indicate whether the terminal is in a low mobility state, the low mobility state is determined by the terminal based on a measurement result of a first serving cell and the low mobility state determining criterion, and the first serving cell is one of multiple serving cells configured for the terminal.

According to a fifth aspect, a terminal is provided. The terminal includes a processor, a memory, and a program or instructions stored in the memory and capable of running on the processor, and when the program or instructions are executed by the processor, the steps of the method according to the first aspect are implemented.

According to a sixth aspect, a terminal is provided, including a processor and a communication interface. The communication interface is configured to: in a case that a terminal is configured with multiple serving cells, obtain a measurement result of a reference signal of a first serving cell, where the first serving cell is one of the multiple serving cells. The processor is configured to determine, based on the measurement result, whether the terminal is in a low mobility state.

According to a seventh aspect, a network-side device is provided. The network-side device includes a processor, a memory, and a program or instructions stored in the memory and capable of running on the processor. When the program or instructions are executed by the processor, the steps of the method according to the first aspect are implemented.

According to an eighth aspect, a network-side device is provided, including a processor and a communication interface. The processor is configured to configure a configuration manner of low mobility state determining criterion for a terminal. The communication interface is configured to receive first indication information from the terminal. The first indication information is used to indicate whether the terminal is in a low mobility state, the low mobility state is determined by the terminal based on a measurement result of a first serving cell and the low mobility state determining criterion, and the first serving cell is one of multiple serving cells configured for the terminal.

According to a ninth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to a tenth aspect, a chip is provided. The chip includes a processor and a communication interface, the communication interface is coupled to the processor, and the processor is configured to run a program or instructions to implement the method according to the first aspect or the method according to the second aspect.

According to an eleventh aspect, a computer program/program product is provided. The computer program/program product is stored in a storage medium, and the program/program product is executed by at least one processor to implement the steps of the method for determining a low mobility state according to the first aspect or the second aspect.

In the embodiments of this application, in a case that the terminal is configured with the multiple serving cells, the terminal determines, based on the measurement result of one first serving cell in the multiple serving cells, whether the terminal is in a low mobility state. In this way, a low mobility state of a terminal can be determined in a case that the terminal is configured with multiple serving cells. Moreover, since whether the terminal is in a low mobility state is determined based on a measurement result of only one serving cell, the processing overheads are low, and power consumption of the terminal is low.

### BRIEF DESCRIPTION OF DRAWINGS

FIG. 1 is a structural diagram of a wireless communication system to which embodiments of this application are applicable;
FIG. 2 is a first schematic flowchart of a method for determining a low mobility state according to an embodiment of this application;
FIG. 3 is a schematic interaction flowchart of a method for determining a low mobility state according to an embodiment of this application;
FIG. 4 is a second schematic flowchart of a method for determining a low mobility state according to an embodiment of this application;
FIG. 5 is a first schematic structural diagram of an apparatus for determining a low mobility state according to an embodiment of this application;
FIG. 6 is a second schematic structural diagram of an apparatus for determining a low mobility state according to an embodiment of this application;
FIG. 7 is a schematic structural diagram of a communication device according to an embodiment of this application;
FIG. 8 is a schematic diagram of a hardware structure of a terminal according to an embodiment of this application; and
FIG. 9 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type and do not limit the quantity of objects. For example, there may be one or a plurality of first objects. In addition, "and/or" in the specification and claims represents at least one of connected objects, and the character "/" generally indicates that the contextually associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. However, in the following descriptions, a new radio (New Radio, NR) system is described for illustration purposes, NR terms are used in most of the following descriptions, and these technologies may also be applied to other applications than the NR system application, for example, the 6th generation (6^{th} Generation, 6G) communication system.

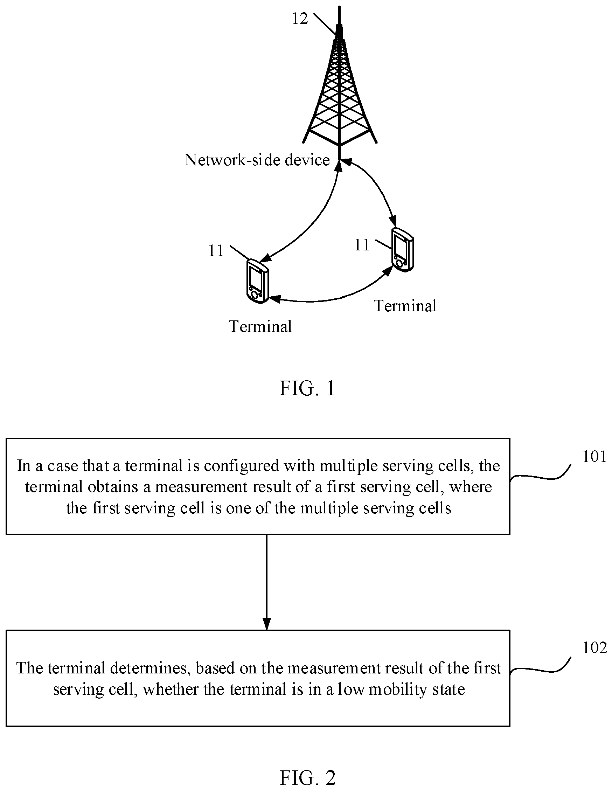

FIG. 1 is a structural diagram of a wireless communication system to which embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture). The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, a game console, or the like. It should be noted that the terminal 11 is not limited to a specific type in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN access point, a Wi-Fi node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

The following describes in detail a method for determining a low mobility state provided in the embodiments of this application by using some embodiments and application scenarios thereof with reference to the accompanying drawings.

According to the method for determining a low mobility state in the embodiments of this application, in a case that a terminal is in a connected state and configured with multiple serving cells, the terminal determines, based on a measurement result of one of the serving cells, whether the terminal is in a low mobility state. This not only significantly reduces the processing overheads for low mobility state determining of the terminal, but also avoids a conflict in processing logic of the terminal caused by different determining results of the multiple serving cells.

FIG. 2 is a first schematic flowchart of a method for determining a low mobility state according to an embodiment of this application. As shown in FIG. 2, the method for determining a low mobility state according to this embodiment of this application includes the following steps.

Step 101. In a case that a terminal is configured with multiple serving cells, the terminal obtains a measurement result of a first serving cell, where the first serving cell is one of the multiple serving cells.

Specifically, in a case that the terminal is configured with multiple serving cells, in order to reduce the processing complexity for the terminal, the terminal may determine, based on a measurement result of one first serving cell in the multiple serving cells, whether the terminal is in a low mobility state.

Optionally, the terminal may select one first serving cell based on a configuration of the network-side device. For example, the network-side device may indicate a serving cell or cell group used for low mobility state determining. Alternatively, the network-side device does not explicitly indicate the serving cell or cell group used for low mobility state determining. For example, the terminal selects a primary cell (Primary Cell, PCell) or primary secondary cell (Primary Secondary Cell, PSCell) in the multiple serving cells. Alternatively, the terminal may select the first serving cell in the multiple serving cells based on a predetermined rule, for example, selecting a serving cell with high priority from the multiple serving cells.

Step 102. The terminal determines, based on the measurement result of the first serving cell, whether the terminal is in a low mobility state.

Specifically, the terminal determines, based on the measurement result of the first serving cell, that the terminal is in a low mobility state or not in a low mobility state. The low mobility state refers to a state that the terminal is stationary or moving within a limited range.

For example, the measurement result of the first serving cell is compared with a certain measurement reference value. If the difference is small, the terminal is in a low mobility state. If the difference is large, the terminal is not in a low mobility state. The initial value of the measurement reference value may be configured by the network-side device or determined by the terminal itself. Optionally, the measurement reference value may be updated based on the measurement result.

Optionally, a special case of the low mobility state is the stationary state.

According to the method in this embodiment, in a case that the terminal is configured with the multiple serving cells, the terminal determines, based on the measurement result of one first serving cell in the multiple serving cells, whether the terminal is in a low mobility state. In this way, a low mobility state of a terminal can be determined in a case that the terminal is configured with multiple serving cells. Moreover, since whether the terminal is in a low mobility state is determined based on a measurement result of only one serving cell, the processing complexity is low, and power consumption of the terminal is low.

In this embodiment, the measurement result is a measurement result of at least one of the following reference signals:
synchronization signal and PBCH block (Synchronization Signal and PBCH block, SSB);
channel state information reference signal (Channel State Information Reference Signal, CSI-RS) used for time-frequency tracking;
CSI-RS used for channel state measurement; and
CSI-RS used for mobility measurement.

Optionally, the measurement result includes any one or a combination of the following:
reference signal received power (Reference Signal Received Power, RSRP);
reference signal received quality (Reference Signal Received Quality RSRQ); and
signal to interference plus noise ratio (Signal to Interference plus Noise Ratio, SINR).

Optionally, in a case of being a combination, the measurement result includes at least reference signal received power RSRP.

Optionally, RSRP, RSRQ, or SINR is a smooth-filtered measurement result.

In this embodiment of this application, after step 102, the following step can further be performed:

Based on the terminal being in a low mobility state, it is determined that measurement relaxation is to be performed on the first serving cell. The measurement relaxation includes one or more of the following: radio link monitoring (Radio Link Monitoring, RLM) measurement relaxation, beam failure detection (Beam Failure Detection, BFD) measurement relaxation, or radio resource management (Radio Resource Management, RRM) measurement relaxation.

Specifically, after the terminal is in a low mobility state, measurement relaxation may be performed on the first serving cell. Optionally, measurement relaxation may further be performed on other serving cells configured for the terminal. Measurement relaxation such as increasing a measurement gap can reduce the power consumption of the terminal.

In the foregoing embodiment, in a case that the terminal is in a low mobility state, the terminal can relax the measurement on the serving cell, that is, lower the measurement requirement, resulting in low power consumption for the terminal.

In this embodiment of this application, the first serving cell is determined by the terminal based on a configuration manner of low mobility state determining criterion sent by the network-side device.

The configuration manner of low mobility state determining criterion includes, for example, terminal-based configuration, cell group-based configuration, or serving cell-based configuration.

Specifically, terminal-based configuration means that the low mobility state determining criterion is configured at a terminal level, that is, the configuration is valid for all serving cells of all cell groups of the terminal. Cell group-based configuration means that the low mobility state determining criterion is configured at a cell group level, that is, the configuration is valid for all serving cells of a specific cell group of the terminal. Serving cell-based configuration means that the low mobility state determining criterion is configured at a serving cell level, that is, the configuration is valid for a specific serving cell of the terminal.

Specifically, the network-side device can configure the low mobility state determining criterion based on terminal, cell group, or serving cell. In different configuration manners, the terminal may select in different manners the first serving cell used for determining a low mobility state, Therefore, the terminal needs to learn from the network-side device the current configuration manner of the low mobility state determining criterion. Based on this configuration manner, the terminal selects one first serving cell from the multiple serving cells.

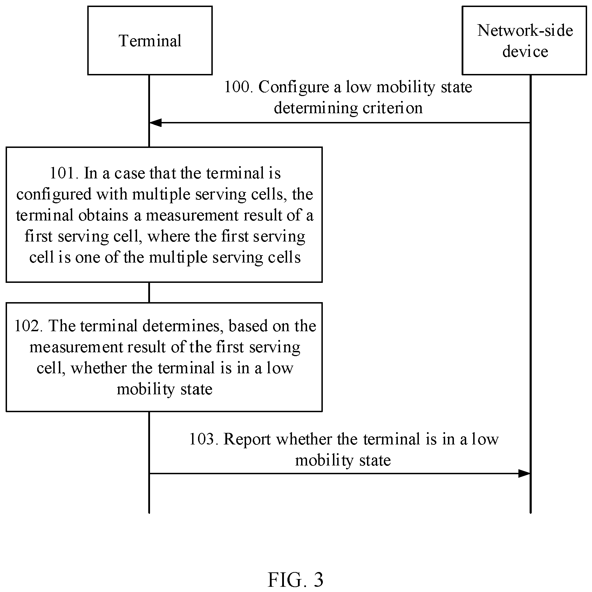

As shown in FIG. 3, in step 100, the network-side device configures the low mobility state determining criterion for the terminal. One first serving cell is determined based on the configuration manner of the low mobility state determining criterion, and based on the measurement result of the first serving cell, the terminal is determined to be in a low mobility state. Optionally, step 103 may further be performed: the terminal reports to the network-side device that the terminal is in a low mobility state.

For the terminal-based configuration manner, the low mobility state determining criterion configured for the terminal is applicable to all cell groups. For a specific terminal, the low mobility state determining criterion can be configured or not configured.

For the cell group-based configuration manner, different cell groups are configured with respective low mobility state determining criteria. Parameter values of related parameters for the low mobility state determining criteria configured for the different cell groups can be the same or different. For a specific cell group, the low mobility state determining criterion can be configured or not configured. If the low mobility state determining criterion is not configured for a cell group, the cell group is not used for low mobility state determining for the terminal.

For the serving cell-based configuration manner, different serving cells are configured with respective low mobility state determining criteria. For a specific serving cell, the low mobility state determining criterion can be configured or not configured. If the low mobility state determining criterion is not configured for a certain serving cell, the serving cell is not used for low mobility state determining for the terminal. That is, the serving cell is not used as the first serving cell.

In the foregoing embodiment, based on the configuration manner of low mobility state determining criterion sent by the network-side device, the terminal can determine which serving cell of the multiple serving cells is selected as the first serving cell, featuring low processing complexity.

In this embodiment of this application, the first serving cell can be determined in the following manners.

### Manner 1

In a case that the configuration manner of low mobility state determining criterion is terminal-based,
in presence of a new radio NR primary cell PCell, the first serving cell is the NR PCell; or
in absence of an NR PCell, the first serving cell is the first primary secondary cell PSCell configured by the network-side device.

Specifically, for the terminal-based configuration manner, in a case that there is an NR primary cell PCell among the multiple serving cells of the terminal, the PCell is selected as the first serving cell. Based on the measurement result of the PCell, the low mobility status of the terminal, that is, whether it is in a low mobility state, is determined.

In a case that there is no NR primary cell PCell among the multiple serving cells of the terminal, for example, if the multiple serving cells are 4G serving cells, the first primary secondary cell PSCell, configured by the network-side device, among the multiple serving cells is selected as the first serving cell. Based on the measurement result of the PSCell, the low mobility status of the terminal, that is, whether it is in a low mobility state, is determined.

NR is a generic term for the 5G air interface.

### Manner 2

In a case that the configuration manner of low mobility state determining criterion is cell group-based, the first serving cell is a primary cell PCell or primary secondary cell PSCell in a target cell group.

Specifically, for the cell group-based configuration manner, the first serving cell used for determining whether the terminal is in a low mobility state may be a primary cell PCell or primary secondary cell PSCell in a target cell group. Based on the measurement result of the primary cell PCell or primary secondary cell PSCell, the low mobility status of the terminal, that is, whether it is in a low mobility state, is determined.

The target cell group is a target cell group among the cell groups to which the multiple serving cells belong. How the target cell group is specifically selected is described in detail in subsequent embodiments.

### Manner 3

In a case that the configuration manner of low mobility state determining criterion is serving cell-based,
the first serving cell is the only serving cell that is configured by the network-side device and that is used for determining a low mobility state based on a cell measurement result.

Alternatively, in a case that the network-side device configures a low mobility state determining criterion for multiple serving cells, the following cases are included:
case 1: the first serving cell is the first or most recent serving cell that is configured by the network-side device and that is used for determining a low mobility state based on a cell measurement result;
case 2: the first serving cell is a second serving cell in a target cell group that is configured by the network-side device and that is used for determining a low mobility state, where the second serving cell is the only serving cell configured with a low mobility state determining criterion in the target cell group; or
case 3: the first serving cell is determined based on serving cell priorities configured by the network-side device.

Specifically, for the serving cell-based configuration manner, the first serving cell may be the only serving cell that is configured by the network-side device and that is used for determining, based on a cell measurement result, whether the terminal is in a low mobility state.

Alternatively, in a case that the network-side device configures the low mobility state determining criterion for multiple serving cells, the terminal needs to determine, based on other configuration information from the network-side device, which serving cell should be used for determining whether the terminal is in a low mobility state, that is, which serving cell should be determined as the first serving cell.

For case 1, the first serving cell may be the first or most recent serving cell configured by the network-side device for determining, based on a cell measurement result, whether the terminal is in a low mobility state. For example, if the network-side device separately indicates that serving cell 1, serving cell 2, and serving cell 3 are configured with a low mobility state determining criterion, for example, configures a low mobility state determining criterion for only one serving cell at a time, serving cell 1 is the 1st serving cell configured with a low mobility state determining criterion. The most recent serving cell refers to a serving cell that is most recently configured with a low mobility state determining criterion by the network-side device, such as a serving cell corresponding to the most recent configuration from the current time.

For case 2, the first serving cell is a second serving cell in a target cell group that is configured by the network-side device and that is used for determining a low mobility state, where the second serving cell is the only serving cell configured with a low mobility state determining criterion in the target cell group.

For case 3, the first serving cell may alternatively be determined based on priorities corresponding to serving cells. For example, a serving cell with the highest priority among serving cells configured with a low mobility state determining criterion is determined as the first serving cell. The terminal determines, based on a low mobility state determining criterion configured for the serving cell with the highest priority, whether the terminal is in a low mobility state.

Optionally, for case 3, the serving cell used for low mobility state determining may alternatively be an SCell.

Optionally, the target cell group can be determined in the following several manners:
the target cell group is determined based on a target signaling message sent by the network-side device;
the target cell group is the first, most recent, or only cell group configured with a low mobility state determining criterion and configured by the network-side device; or
the target cell group is determined based on priorities corresponding to cell groups configured by the network-side device.

Specifically, the target signaling message is, for example, an RRC setup (Setup) or RRC reconfiguration (Reconfig) signaling message sent by the network-side device. The target signaling message can indicate the cell group used for low mobility state determining.

The most recent cell group configured with a low mobility state determining criterion refers to a cell group that was most recently configured with a low mobility state determining criterion and configured by the network-side device.

The target cell group may alternatively be determined based on priorities corresponding to cell groups. For example, a cell group with the highest priority among cell groups configured with a low mobility state determining criterion is determined as the target cell group.

The terminal determines, based on a related parameter in a low mobility state determining criterion configured for the target cell group, whether the terminal is in a low mobility state. The related parameter includes duration, target threshold, priority parameter for cell group, priority parameter for serving cell, or the like.

In the foregoing embodiment, the terminal may select one first serving cell based on different configuration manners of low mobility state determining criterion, and determine, based on a measurement result of the first serving cell, whether the terminal is in a low mobility state. This allows for low processing complexity.

In this embodiment of this application, the method for determining a low mobility state further includes:
in a case that when in an idle state, the terminal has determined that the terminal is in a low mobility state, upon entering a connected state, reporting to a network-side device that the terminal is in a low mobility state.

Specifically, if the terminal has performed related measurement on the frequency of a primary cell PCell or primary secondary cell PSCell or secondary cell (Secondary Cell, SCell) frequency when in an idle state, and based on a low mobility state determining criterion for idle state, the terminal has determined that the terminal is in a low mobility state under the idle state, the terminal can enter a connected state while remaining in a low mobility state, that is, it is determined that the terminal is also in a low mobility state when being in the connected state, and upon entering the connected state, the terminal reports to the network-side device that the terminal is in a low mobility state. The measurement may be, for example, early measurement (early measurement) in a DC scenario or SCell scenario.

In the foregoing embodiment, the result of being in a low mobility state determined by the terminal in the idle state is applied to the connected state, and the terminal does not need to perform measurement result-based determining again, so that unnecessary processing is reduced, thus reducing terminal power consumption and reducing processing time.

In this embodiment of this application, step 102 can be implemented in the following manners:
determining that the terminal is in a low mobility state in a case that a measurement result of at least one reference signal of the first serving cell satisfies a low mobility state determining criterion;
determining that the terminal is in a low mobility state in a case that measurement results of all reference signals of the first serving cell satisfy a low mobility state determining criterion; or
determining that the terminal is in a low mobility state based on an average or maximum value of measurement results of multiple reference signals of the first serving cell, where the multiple reference signals are synchronization signal and PBCH blocks SSB of different indexes or channel state information reference signals CSI-RS of a same type but different ports.

Optionally, the method for determining a low mobility state further includes:
determining that the terminal is not in a low mobility state in a case that none of measurement results of all reference signals of the first serving cell satisfies a low mobility state determining criterion; or
determining that the terminal is not in a low mobility state in a case that a measurement result of at least one reference signal of the first serving cell does not satisfy a low mobility state determining criterion.

Specifically, in a case that there are multiple reference signals used for low mobility state determining, if the measurement result of any one of the reference signals satisfies the low mobility state determining criterion, the terminal is in a low mobility state. For example, the terminal has been in a low mobility state for a period of time or the terminal was not in a low mobility state before and now enters a low mobility state. When none of measurement results of all reference signals satisfies the low mobility state determining criterion, it is determined that the terminal is not in a low mobility state. For example, the terminal has been out of a low mobility state for a period of time or the terminal was in a low mobility state before and now exits from the low mobility state.

In a case that there are multiple reference signals used for low mobility state determining, if measurement results of all reference signals satisfy the low mobility state determining criterion, it is determined that the terminal is in a low mobility state. For example, the terminal has been in a low mobility state for a period of time or the terminal was not in a low mobility state before and now enters a low mobility state. When none of measurement results of all reference signals satisfies the low mobility state determining criterion, it is determined that the terminal is not in a low mobility state. For example, the terminal has been out of a low mobility state for a period of time or the terminal was in a low mobility state before and now exits from the low mobility state.

In a case that there are multiple reference signals used for low mobility state determining, and that these reference signals are SSBs of different indexes (index) or CSI-RS of the same type but different ports, the terminal determines, based on the average or maximum value of the measurement results of the multiple reference signals, whether the terminal is in a low mobility state. For example, the average value of the measurement results of the multiple reference signals are computed and the average value is compared with the measurement reference value. If the difference is small, it is determined that the terminal is in a low mobility state. Otherwise, the terminal is not in a low mobility state.

The foregoing embodiment implements how a low mobility state of the terminal is determined in the presence of multiple reference signals. The implementation process is simple.

In this embodiment of this application, the low mobility state determining criterion is a difference between a measurement reference value and a corrected value of the measurement result being less than or equal to a target threshold, where the measurement reference value is obtained based on a cell measurement result of the terminal in a connected state or a measurement reference value of the terminal in an idle state.

Optionally, the terminal determines, based on the measurement reference value Low_Mob_REF and the measurement result, whether the terminal is in a low mobility state. If the difference between the measurement result Low_Mob_Meas of the terminal and Low_Mob_REF is less than or equal to the target threshold, the terminal is in a low mobility state.

Whether (Low_Mob_REF - Low_Mob_Meas) < S_{SearchDeltaP} is satisfied is determined, where S_{SearchDeltaP} may be the target threshold configured by the network. If the condition is satisfied, the terminal is in a low mobility state. If the condition is not satisfied, the terminal is not in a low mobility state. The Low_Mob_REF is the measurement reference value.

Optionally, the terminal may determine, based on the measurement result for the connected state, whether Low_Mob_REF needs to be updated. Let Low_Mob_REF = Low_Mob_Meas if one or more of the following three conditions are met:
a. The UE has just entered the current first serving cell through cell selection or cell reselection, that is, the current measurement is the first measurement performed by the terminal on the current first serving cell.
b. Low_Mob_Meas < Low_Mob_REF.
c. The terminal has not met the low mobility state determining criterion for a period of time (T_{SearchDeltaP}), where the timer duration T_{SearchDeltaP} can be configured by the network.

Optionally, if the low mobility criterion is also configured for the idle state and can be applied to the connected state, the measurement reference value for the idle state can also be applied to the connected state. To be specific, Low_Mob_REF is determined based on the measurement reference value Srxlev_Ref for the idle state.

Optionally, the initial Low_Mob_REF may be configured by the network-side device or determined based on the cell measurement result of the terminal in the connected state or the measurement reference value for the idle state.

For example, for the terminal-based low mobility state determining criterion, for example, in the CA/DC scenario in connected state, the method for determining a low mobility state includes the following steps:

Step 1a: Receive a related parameter of a low mobility state determining criterion configured by the network-side device.

The related parameter includes, for example, duration T_{SearchDeltaP} and target threshold S_{SearchDeltaP}. This configuration of low mobility state determining criterion can be valid for all CGs. For example, in a case that the terminal finds an NR system information block (System Information Block, SIB), that is, in a case that there is an NR primary cell PCell, the low mobility state determining criterion can be directly configured in SIB2. In a case that the terminal finds no NR SIB, that is, in a case that there is no NR primary cell PCell, the low mobility state determining criterion is provided in signaling (such as radio resource control (Radio Resource Control, RRC) signaling) loaded by an NR secondary cell group (Secondary Cell Group, SCG). In this case, the network-side device can configure the low mobility state determining criterion in only the NR SCG signaling that is firstly configured, and the terminal determines, based on a PSCell in the NR SCG, whether the terminal is in low mobility. The network-side device may alternatively configure the corresponding low mobility criterion in a case of configuring early measurement (early measurement) on a frequency corresponding to the NR SCG.

Step 2a. Based on the measurement result and the measurement reference value Low_Mob_REF for the connected state, the terminal determines whether the terminal is in a low mobility state.

Step 3a. In a case that the terminal is in a low mobility state, the terminal enters an RLM/BFD/RRM measurement relaxation state.

For example, for the cell group-based low mobility state determining criterion, for example, in the CA/DC scenario in connected state, the method for determining a low mobility state includes the following steps:

Step 1b: Receive a related parameter of a low mobility state determining criterion configured by the network-side device.

The related parameter includes, for example, duration T_{SearchDeltaP} and target threshold S_{SearchDeltaP}. The low mobility state determining criterion is configured separately for each cell group CG. In a case that multiple CGs are configured with related parameters, that is, multiple CGs are all configured with a low mobility state determining criterion, the terminal determines, based on other configurations from the network-side device, a CG for determining whether the terminal is in a low mobility state. For example, the network-side device may explicitly indicate, in an RRC setup (Setup) message or RRC reconfiguration (Reconfig) message, a CG for determining whether the terminal is in a low mobility state. For another example, the terminal may use the first, most recent, or only CG configured with a low mobility state determining criterion and configured by the network-side device, to determine whether the terminal is in a low mobility state. For another example, the main parameter includes priority configurations of cell groups. For example, the terminal determines, based on the low mobility state determining criterion configured for the CG with highest priority, the parameter used for low mobility state determining, so as to determine whether the terminal is in a low mobility state. In this case, the first serving cell used for low mobility state determining may be a PCell or PSCell in this CG.

Step 2b. Based on the measurement result and the measurement reference value Low_Mob_REF for the connected state, the terminal determines whether the terminal is in a low mobility state.

Step 3b. In a case that the terminal is in a low mobility state, the terminal enters an RLM/BFD/RRM measurement relaxation state.

For example, for the serving cell-based low mobility state determining criterion, for example, in the CA/DC scenario in connected state, the method for determining a low mobility state includes the following steps:

Step 1c: Receive a related parameter of a low mobility state determining criterion configured by the network-side device.

The related parameter includes, for example, duration T_{SearchDeltaP} and target threshold S_{SearchDeltaP}. The low mobility state determining criterion is configured separately for each serving cell. Optionally, the network-side device configures a low mobility state determining criterion for only one of the serving cells. Optionally, the network-side device configures low mobility state determining criteria for all the multiple serving cells. The terminal needs to determine, based on other configuration information from the network-side device, a serving cell used for low mobility state determining. For example, the terminal can use the first, most recent, or only serving cell configured by the network-side device for measurement result-based low mobility state determining to determine whether the terminal is in a low mobility state, that is, use the first or most recent serving cell configured by the network-side device for measurement result-based low mobility state determining as the first serving cell. For another example, the terminal determines, based on a configuration from the network-side device, the target cell group used for low mobility state determining, and selects a serving cell configured with a low mobility state determining criterion in the target cell group to determine whether the terminal is in a low mobility state, where there is only one serving cell configured with a low mobility state determining criterion in the target cell group. For the manner of determining the target cell group, reference may be made to the foregoing embodiments. For another example, the main parameter further includes priority configurations of cells. For example, the terminal determines the related parameter based on the low mobility state determining criterion configured for the serving cell with highest priority, so as to determine whether the terminal is in a low mobility state. In this case, the serving cell with highest priority may alternatively be an SCell.

Step 2c. Based on the measurement result and the measurement reference value Low_Mob_REF for the connected state, the terminal determines whether the terminal is in a low mobility state.

Step 3c. In a case that the terminal is in a low mobility state, the terminal enters an RLM/BFD/RRM measurement relaxation state.

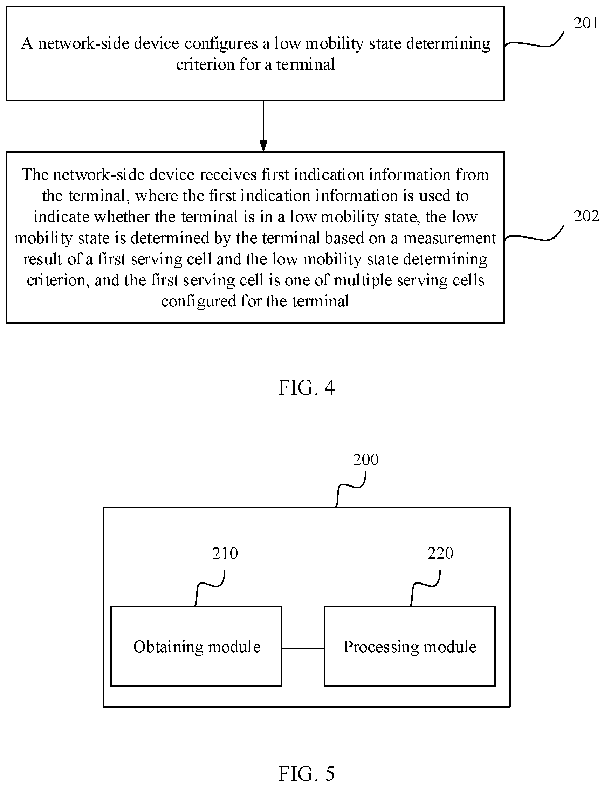

FIG. 4 is a second schematic flowchart of a method for determining a low mobility state according to an embodiment of this application. As shown in FIG. 4, the method for determining a low mobility state according to this embodiment of this application includes the following steps.

Step 201. A network-side device configures a low mobility state determining criterion for a terminal.

Step 202. The network-side device receives first indication information from the terminal, where the first indication information is used to indicate whether the terminal is in a low mobility state, the low mobility state is determined by the terminal based on a measurement result of a first serving cell and the low mobility state determining criterion, and the first serving cell is one of multiple serving cells configured for the terminal.

Optionally, the network-side device may configure a low mobility state determining criterion based on terminal, serving cell, or cell group. The terminal needs to use the low mobility state determining criterion for low mobility state determining. The terminal selects one first serving cell from the multiple serving cells, and determines, based on a measurement result of that first serving cell and the low mobility state determining criterion, whether the terminal is in a low mobility state. For example, whether the measurement result of the first serving cell satisfies the low mobility state determining criterion is determined. If satisfied, it is determined that the terminal is in a low mobility state. If not satisfied, it is determined that the terminal is not in a low mobility state.

In the method of this embodiment, in a case that the terminal is configured with the multiple serving cells, the terminal determines, based on the measurement result of one first serving cell in the multiple serving cells, whether the terminal is in a low mobility state, and reports this to the network-side device. In this way, a low mobility state of a terminal can be determined in a case that the terminal is configured with multiple serving cells. Moreover, since whether the terminal is in a low mobility state is determined based on a measurement result of only one serving cell, the processing complexity is low, and power consumption of the terminal is low.

Optionally, in a case that the configuration manner of low mobility state determining criterion is terminal-based,
in presence of a new radio NR primary cell PCell, the first serving cell is the NR PCell; or
in absence of an NR PCell, the first serving cell is the first primary secondary cell PSCell configured by the network-side device.

Optionally, in a case that the configuration manner of low mobility state determining criterion is cell group-based, the first serving cell is a primary cell PCell or primary secondary cell PSCell in a target cell group.

Optionally, in a case that the configuration manner of low mobility state determining criterion is serving cell-based,
the first serving cell is the only serving cell that is configured by the network-side device and that is used for determining a low mobility state based on a cell measurement result;
the first serving cell is the first or most recent serving cell that is configured by the network-side device and that is used for determining a low mobility state based on a cell measurement result;
the first serving cell is a second serving cell in a target cell group that is configured by the network-side device and that is used for determining a low mobility state, where the second serving cell is the only serving cell in the target cell group, configured for determining a low mobility state based on a cell measurement result; or
the first serving cell is determined based on priorities corresponding to serving cells configured by the network-side device.

Optionally, the target cell group is determined based on a target signaling message sent by the network-side device;
the target cell group is the first, most recent, or only cell group configured with a low mobility state determining criterion and configured by the network-side device; or
the target cell group is determined based on priorities corresponding to cell groups configured by the network-side device.

Optionally, the method further includes the following step:
receiving, by the network-side device, second indication information from the terminal, where the second indication information is sent by the terminal upon entering a connected state and used to indicate that the terminal is in a low mobility state, and the low mobility state indicated by the second indication information is determined by the terminal in an idle state.

Optionally, the terminal is in a low mobility state in a case that a measurement result of at least one reference signal of the first serving cell satisfies a low mobility state determining criterion;
the terminal is in a low mobility state in a case that measurement results of all reference signals of the first serving cell satisfy a low mobility state determining criterion;
the terminal is not in a low mobility state in a case that none of measurement results of all reference signals of the first serving cell satisfies a low mobility state determining criterion;
the terminal is not in a low mobility state in a case that a measurement result of at least one reference signal of the first serving cell does not satisfy a low mobility state determining criterion;or
the terminal is determined to be in a low mobility state based on an average or maximum value of measurement results of multiple reference signals of the first serving cell, where the multiple reference signals are synchronization signal and PBCH blocks SSB of different indexes or channel state information reference signals CSI-RS of a same type but different ports.

Optionally, where the low mobility state determining criterion is a difference between a measurement reference value and the measurement result being less than or equal to a first threshold, where the measurement reference value is obtained based on a cell measurement result or a measurement reference value of the terminal in an idle state.

The specific implementation process and technical effects of the foregoing embodiment are similar to the embodiments of the terminal side. For details, reference may be made to the detailed description in the embodiments of the terminal side. Details are not repeated herein.

It should be noted that the method for determining a low mobility state provided in this embodiment of this application may be performed by an apparatus for determining a low mobility state or a processing module for performing the method for determining a low mobility state in the apparatus for determining a low mobility state. An apparatus for determining a low mobility state provided in an embodiment of this application is described by assuming that the method for determining a low mobility state in this embodiment of this application is performed by the apparatus for determining a low mobility state.

FIG. 5 is a schematic structural diagram of an apparatus for determining a low mobility state according to this application. The apparatus 200 for determining a low mobility state according to this embodiment of this application includes:
an obtaining module 210 configured to: in a case that a terminal is configured with multiple serving cells, obtain a measurement result of a first serving cell, where the first serving cell is one of the multiple serving cells; and
a processing module 220 configured to determine, based on the measurement result, whether the terminal is in a low mobility state.

Optionally, the first serving cell is determined by the terminal based on a configuration manner of low mobility state determining criterion sent by a network-side device.

Optionally, in a case that the configuration manner of low mobility state determining criterion is terminal-based,
in presence of a new radio NR primary cell PCell, the first serving cell is the NR PCell; or
in absence of an NR PCell, the first serving cell is the first primary secondary cell PSCell configured by the network-side device.

Optionally, in a case that the configuration manner of low mobility state determining criterion is cell group-based, the first serving cell is a primary cell PCell or primary secondary cell PSCell in a target cell group.

Optionally, in a case that the configuration manner of low mobility state determining criterion is serving cell-based,
the first serving cell is the only serving cell that is configured by the network-side device and that is used for determining a low mobility state based on a cell measurement result;
the first serving cell is the first or most recent serving cell that is configured by the network-side device and that is used for determining a low mobility state based on a cell measurement result;
the first serving cell is a second serving cell in a target cell group that is configured by the network-side device and that is used for determining a low mobility state, where the second serving cell is the only serving cell configured with a low mobility state determining criterion in the target cell group; or
the first serving cell is determined based on priorities corresponding to serving cells configured by the network-side device.

Optionally, the target cell group is determined based on a target signaling message sent by the network-side device;
the target cell group is the first, most recent, or only cell group configured with a low mobility state determining criterion and configured by the network-side device; or
the target cell group is determined based on priorities corresponding to cell groups configured by the network-side device.

Optionally, the apparatus may further include:
a sending module (not shown in FIG. 5) configured to: in a case that when in an idle state, the terminal has determined that the terminal is in a low mobility state, upon entering a connected state, report to a network-side device that the terminal is in a low mobility state.

Optionally, the processing module 220 is specifically configured to:
determine that the terminal is in a low mobility state in a case that a measurement result of at least one reference signal of the first serving cell satisfies a low mobility state determining criterion;
determine that the terminal is in a low mobility state in a case that measurement results of all reference signals of the first serving cell satisfy a low mobility state determining criterion; or
determine that the terminal is in a low mobility state based on an average or maximum value of measurement results of multiple reference signals of the first serving cell, where the multiple reference signals are synchronization signal and PBCH blocks SSB of different indexes or channel state information reference signals CSI-RS of a same type but different ports.

Optionally, the processing module 220 is further configured to:
determine that the terminal is not in a low mobility state in a case that none of measurement results of all reference signals of the first serving cell satisfies a low mobility state determining criterion; or
determine that the terminal is not in a low mobility state in a case that a measurement result of at least one reference signal of the first serving cell does not satisfy a low mobility state determining criterion.

Optionally, the low mobility state determining criterion is a difference between a measurement reference value and the measurement result being less than or equal to a target threshold, where the measurement reference value is obtained based on a cell measurement result of the terminal in a connected state or a measurement reference value of the terminal in an idle state.

According to the apparatus of this embodiment, in a case that the terminal is configured with the multiple serving cells, the processing module determines, based on the measurement result of one first serving cell in the multiple serving cells, whether the terminal is in a low mobility state. In this way, a low mobility state of a terminal can be determined in a case that the terminal is configured with multiple serving cells. Moreover, since whether the terminal is in a low mobility state is determined based on a measurement result of only one serving cell, the processing complexity is low, and power consumption of the terminal is low.

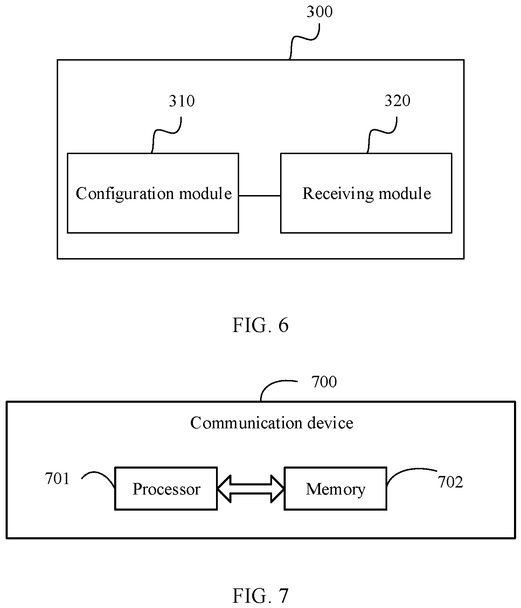

FIG. 6 is a schematic structural diagram of an apparatus for determining a low mobility state according to this application. The apparatus 300 for determining a low mobility state according to this embodiment of this application includes:
a configuration module 310 configured to configure a low mobility state determining criterion for a terminal; and
a receiving module 320 configured to receive first indication information from the terminal, where the first indication information is used to indicate whether the terminal is in a low mobility state, the low mobility state is determined by the terminal based on a measurement result of a first serving cell and the low mobility state determining criterion, and the first serving cell is one of multiple serving cells configured for the terminal.

Optionally, in a case that the configuration manner of low mobility state determining criterion is terminal-based,
in presence of a new radio NR primary cell PCell, the first serving cell is the NR PCell; or
in absence of an NR PCell, the first serving cell is the first primary secondary cell PSCell configured by the network-side device.

Optionally, in a case that the configuration manner of low mobility state determining criterion is cell group-based, the first serving cell is a primary cell PCell or primary secondary cell PSCell in a target cell group.

Optionally, in a case that the configuration manner of low mobility state determining criterion is serving cell-based,
the first serving cell is the only serving cell that is configured by the network-side device and that is used for determining a low mobility state based on a cell measurement result;
the first serving cell is the first or most recent serving cell that is configured by the network-side device and that is used for determining a low mobility state based on a cell measurement result;
the first serving cell is a second serving cell in a target cell group that is configured by the network-side device and that is used for determining a low mobility state, where the second serving cell is the only serving cell in the target cell group, configured for determining a low mobility state based on a cell measurement result; or
the first serving cell is determined based on priorities corresponding to serving cells configured by the network-side device.

Optionally, the target cell group is determined based on a target signaling message sent by the network-side device;
the target cell group is the first, most recent, or only cell group configured with a low mobility state determining criterion and configured by the network-side device; or
the target cell group is determined based on priorities corresponding to cell groups configured by the network-side device.

Optionally, the receiving module 320 is further configured to:
receive second indication information from the terminal, where the second indication information is sent by the terminal upon entering a connected state and used to indicate that the terminal is in a low mobility state, and the low mobility state indicated by the second indication information is determined by the terminal in an idle state.

Optionally, the terminal is in a low mobility state in a case that a measurement result of at least one reference signal of the first serving cell satisfies a low mobility state determining criterion;
the terminal is in a low mobility state in a case that measurement results of all reference signals of the first serving cell satisfy a low mobility state determining criterion;
the terminal is not in a low mobility state in a case that none of measurement results of all reference signals of the first serving cell satisfies a low mobility state determining criterion;
the terminal is not in a low mobility state in a case that a measurement result of at least one reference signal of the first serving cell does not satisfy a low mobility state determining criterion; or
the terminal is determined to be in a low mobility state based on an average or maximum value of measurement results of multiple reference signals of the first serving cell, where the multiple reference signals are synchronization signal and PBCH blocks SSB of different indexes or channel state information reference signals CSI-RS of a same type but different ports.

Optionally, where the low mobility state determining criterion is a difference between a measurement reference value and the measurement result being less than or equal to a first threshold, where the measurement reference value is obtained based on a cell measurement result or a measurement reference value of the terminal in an idle state.

According to the apparatus of this embodiment, in a case that the terminal is configured with the multiple serving cells, the terminal determines, based on the measurement result of one first serving cell in the multiple serving cells, whether the terminal is in a low mobility state, and reports this to the network-side device. In this way, a low mobility state of a terminal can be determined in a case that the terminal is configured with multiple serving cells. Moreover, since whether the terminal is in a low mobility state is determined based on a measurement result of only one serving cell, the processing complexity is low, and power consumption of the terminal is low.

The apparatus for determining a low mobility state in this embodiment of this application may be an apparatus or an apparatus or electronic device having an operating system, or may be a component, an integrated circuit, or a chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which are not specifically limited in the embodiments of this application.

The apparatus for determining a low mobility state provided in the embodiments of this application can implement the processes that are implemented in the method embodiments of FIG. 2 to FIG. 4, with the same technical effects achieved. To avoid repetition, details are not described herein again.

Optionally, as shown in FIG. 7, an embodiment of this application further provides a communication device 700 including a processor 701, a memory 702, and a program or instructions stored in the memory 702 and capable of running on the processor 701. For example, in a case that the communication device 700 is a terminal, the program or instructions are executed by the processor 701 to implement the processes in the foregoing embodiments of the method for determining a low mobility state, with the same technical effects achieved. In a case that the communication device 700 is a network-side device, when the program or the instructions are executed by the processor 701, the processes in the foregoing embodiments of the method for determining a low mobility state are implemented, with the same technical effects achieved. To avoid repetition, details are not described herein again.

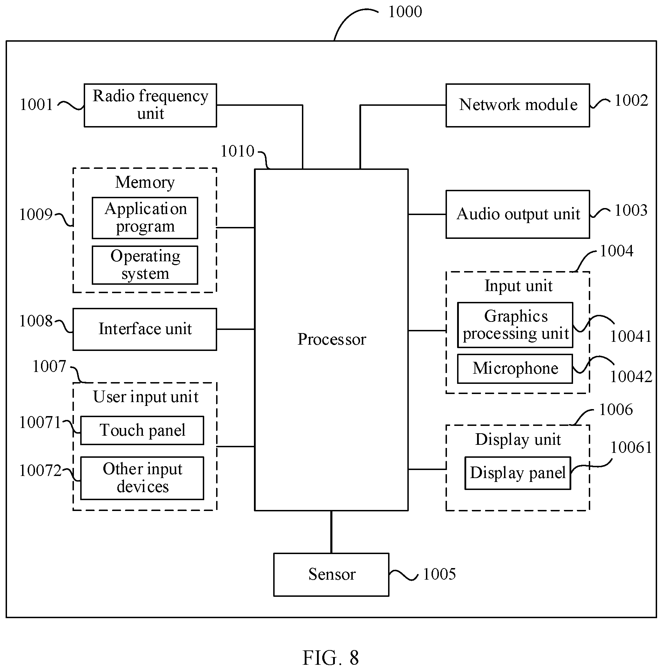

An embodiment of this application further provides a terminal including a processor and a communication interface. The communication interface is configured to: in a case that a terminal is configured with multiple serving cells, obtain a measurement result of a first serving cell, where the first serving cell is one of the multiple serving cells. The processor is configured to determine, based on the measurement result, whether the terminal is in a low mobility state. The terminal embodiment is corresponding to the foregoing method embodiments used on the terminal side. All the implementation processes and implementation methods of the foregoing method embodiments can be applied to the terminal embodiment, with the same technical effects achieved. Specifically, FIG. 8 is a schematic diagram of a hardware structure of a terminal for implementing embodiments of this application.

The terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power source (for example, a battery) for supplying power to the components. The power source may be logically connected to the processor 1010 through a power management system. In this way, functions such as charge management, discharge management, and power consumption management are implemented by using the power management system. The structure of the terminal shown in FIG. 8 does not constitute a limitation on the terminal. The terminal may include more or fewer components than illustrated in the figure, or combine some components, or have a different component arrangement. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in an image capture mode or a video capture mode. The display unit 1006 may include a display panel 10061. The display panel 10061 may be configured in a form of a liquid crystal display, an organic light-emitting diode display, or the like. The user input unit 1007 includes a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (for example, a volume control button or a power on/off button), a trackball, a mouse, and a joystick. Details are not described herein.

In this embodiment of this application, the radio frequency unit 1001 receives a signal from a target serving cell and transmits it to the processor 1010 for processing; and in addition, transmits the low mobility state of the terminal to the network-side device. Generally, the radio frequency unit 1001 includes but is not limited to an antenna, at least one amplifier, a transceiver, a coupler, a low noise amplifier, a duplexer, and the like.

The memory 1009 may be adapted to store software programs or instructions and various data. The memory 1009 may include a program or instruction storage area and a data storage area. The program or instruction storage area may store an operating system, an application program or instructions required by at least one function (for example, sound play function or image play function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 1010 may include one or more processing units. Optionally, the processor 1010 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 1010.

The processor 1010 is configured to: in a case that a terminal is configured with multiple serving cells, obtain a measurement result of a first serving cell, where the first serving cell is one of the multiple serving cells; and
determine, based on the measurement result, whether the terminal is in a low mobility state.

In this embodiment, in a case that the terminal is configured with the multiple serving cells, the processor of the terminal determines, based on the measurement result of one first serving cell in the multiple serving cells, whether the terminal is in a low mobility state. In this way, a low mobility state of a terminal can be determined in a case that the terminal is configured with multiple serving cells. Moreover, since whether the terminal is in a low mobility state is determined based on a measurement result of only one serving cell, the processing complexity is low, and power consumption of the terminal is low.

Optionally, the first serving cell is determined by the terminal based on a configuration manner of low mobility state determining criterion sent by a network-side device.

In the foregoing embodiment, based on the configuration manner of low mobility state determining criterion sent by the network-side device, the terminal can determine which serving cell of the multiple serving cells is selected as the first serving cell, featuring low processing complexity.

Optionally, in a case that the configuration manner of low mobility state determining criterion is terminal-based,
in presence of a new radio NR primary cell PCell, the first serving cell is the NR PCell, or
in absence of an NR PCell, the first serving cell is the first primary secondary cell PSCell configured by the network-side device;
in a case that the configuration manner of low mobility state determining criterion is cell group-based, the first serving cell is a primary cell PCell or primary secondary cell PSCell in a target cell group; or
in a case that the configuration manner of low mobility state determining criterion is serving cell-based,
the first serving cell is the only serving cell that is configured by the network-side device and that is used for determining a low mobility state based on a cell measurement result,
the first serving cell is the first or most recent serving cell that is configured by the network-side device and that is used for determining a low mobility state based on a cell measurement result,
the first serving cell is a second serving cell in a target cell group that is configured by the network-side device and that is used for determining a low mobility state, where the second serving cell is the only serving cell configured with a low mobility state determining criterion in the target cell group, or
the first serving cell is determined based on priorities corresponding to serving cells configured by the network-side device.

Optionally, the target cell group is determined based on a target signaling message sent by the network-side device;
the target cell group is the first, most recent, or only cell group configured with a low mobility state determining criterion and configured by the network-side device; or
the target cell group is determined based on priorities corresponding to cell groups configured by the network-side device.

In the foregoing embodiment, the terminal may select one first serving cell based on different configuration manners of low mobility state determining criterion, and determine, based on a measurement result of the first serving cell, whether the terminal is in a low mobility state. This allows for low processing complexity.

Optionally, the processor 1010 is further configured to:
in a case that when in an idle state, the terminal has determined that the terminal is in a low mobility state, upon entering a connected state, report to a network-side device that the terminal is in a low mobility state.

In the foregoing embodiment, the result of being in a low mobility state determined by the terminal in the idle state is applied to the connected state, and the terminal does not need to perform measurement result-based determining again, so that unnecessary processing is reduced, thus reducing terminal power consumption and reducing processing time.

Optionally, the processor 1010 is specifically configured to:
determine that the terminal is in a low mobility state in a case that a measurement result of at least one reference signal of the first serving cell satisfies a low mobility state determining criterion;
determine that the terminal is in a low mobility state in a case that measurement results of all reference signals of the first serving cell satisfy a low mobility state determining criterion; or
determine that the terminal is in a low mobility state based on an average or maximum value of measurement results of multiple reference signals of the first serving cell, where the multiple reference signals are synchronization signal and PBCH blocks SSB of different indexes or channel state information reference signals CSI-RS of a same type but different ports.

Optionally, the processor 1010 is further configured to:
determine that the terminal is not in a low mobility state in a case that none of measurement results of all reference signals of the first serving cell satisfies a low mobility state determining criterion; or
determine that the terminal is not in a low mobility state in a case that a measurement result of at least one reference signal of the first serving cell does not satisfy a low mobility state determining criterion.

The foregoing embodiment implements how a low mobility state of the terminal is determined in the presence of multiple reference signals. The implementation process is simple.

Optionally, the low mobility state determining criterion is a difference between a measurement reference value and the measurement result being less than or equal to a target threshold, where the measurement reference value is obtained based on a cell measurement result of the terminal in a connected state or a measurement reference value of the terminal in an idle state.

An embodiment of this application further provides a network-side device including a processor and a communication interface. The processor is configured to configure a low mobility state determining criterion for a terminal. The communication interface is configured to receive first indication information from the terminal. The first indication information is used to indicate whether the terminal is in a low mobility state, the low mobility state is determined by the terminal based on a measurement result of a first serving cell and the low mobility state determining criterion, and the first serving cell is one of multiple serving cells configured for the terminal. This network-side device embodiment corresponds to the foregoing network-side device method embodiment. All processes and implementations in the foregoing method embodiment can be applicable to this network-side device embodiment, with the same technical effects achieved.

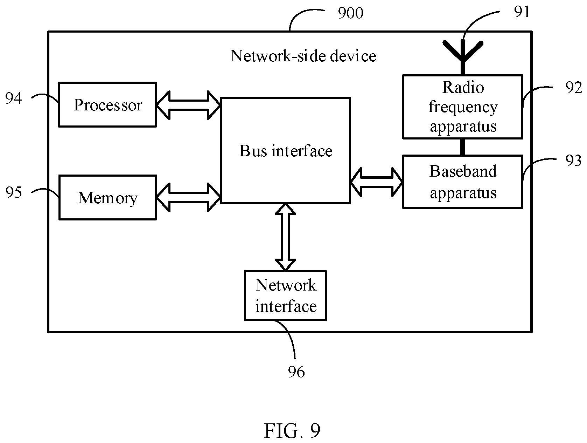

An embodiment of this application further provides a network-side device. As shown in FIG. 9, the network device 900 includes an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and transmits the received information to the baseband apparatus 93 for processing. In a downlink direction, the baseband apparatus 93 processes to-be-sent information and sends the information to the radio frequency apparatus 92; and the radio frequency apparatus 92 processes the received information and then sends the information out by using the antenna 91.

The frequency band processing apparatus may be located in the baseband apparatus 93. The method executed by the network-side device in the foregoing embodiments may be implemented in the baseband apparatus 93, and the baseband apparatus 93 includes a processor 94 and a memory 95.

The baseband apparatus 93 may include, for example, at least one baseband processing unit, where a plurality of chips are disposed on the baseband processing unit. As shown in FIG. 9, one of the chips is, for example, the processor 94, and connected to the memory 95, to invoke the program in the memory 95 to perform the operations of the network device shown in the foregoing method embodiment.

The baseband apparatus 93 may further include a network interface 96 configured to exchange information with the radio frequency apparatus 92, where the interface is, for example, a common public radio interface (common public radio interface, CPRI for short).

The network-side device in this embodiment of this application further includes instructions or a program stored in the memory 95 and capable of running on the processor 94. The processor 94 invokes the instructions or program in the memory 95 to execute the method executed by the modules shown in FIG. 6, with the same technical effects achieved. To avoid repetition, details are not described herein again.

An embodiment of this application further provides a readable storage medium. The readable storage medium stores a program or instructions. When the program or instructions are executed by a processor, the processes in the foregoing embodiments of the method for determining a low mobility state are implemented, with the same technical effects achieved. To avoid repetition, details are not described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement the processes in the foregoing embodiments of the method for determining a low mobility state, with the same technical effects achieved. To avoid repetition, details are not described herein again.

It should be understood that the chip mentioned in the embodiments of this application may also be referred to as a system-level chip, a system chip, a chip system, a system-on-chip, or the like.

In addition, an embodiment of this application further provides a computer program product including a computer program. The computer program is executed by a processor to implement the processes in the foregoing embodiments of the method for determining a low mobility state, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the foregoing description of the embodiments, persons skilled in the art can clearly understand that the method in the foregoing embodiments may be implemented by software with a necessary general hardware platform. Certainly, the method in the foregoing embodiments may alternatively be implemented by hardware. However, in many cases, the former is a preferred embodiment. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. A method for determining a low mobility state, comprising:
in a case that a terminal is configured with multiple serving cells, obtaining, by the terminal, a measurement result of a first serving cell, wherein the first serving cell is one of the multiple serving cells; and
determining, by the terminal based on the measurement result, whether the terminal is in a low mobility state.

2. The method for determining a low mobility state according to claim 1, wherein
the first serving cell is determined by the terminal based on a configuration manner of low mobility state determining criterion sent by a network-side device.

3. The method for determining a low mobility state according to claim 2, wherein
in a case that the configuration manner of low mobility state determining criterion is terminal-based,
in presence of a new radio NR primary cell PCell, the first serving cell is the NR PCell; or
in absence of an NR PCell, the first serving cell is the first primary secondary cell PSCell configured by the network-side device.

4. The method for determining a low mobility state according to claim 2, wherein
in a case that the configuration manner of low mobility state determining criterion is cell group-based, the first serving cell is a primary cell PCell or primary secondary cell PSCell in a target cell group.

5. The method for determining a low mobility state according to claim 2, wherein
in a case that the configuration manner of low mobility state determining criterion is serving cell-based,
the first serving cell is the only serving cell that is configured by the network-side device and that is used for determining a low mobility state based on a cell measurement result;
the first serving cell is the first or most recent serving cell that is configured by the network-side device and that is used for determining a low mobility state based on a cell measurement result;
the first serving cell is a second serving cell in a target cell group that is configured by the network-side device and that is used for determining a low mobility state, wherein the second serving cell is the only serving cell configured with a low mobility state determining criterion in the target cell group; or
the first serving cell is determined based on priorities corresponding to serving cells configured by the network-side device.

6. The method for determining a low mobility state according to claim 4 or 5, wherein
the target cell group is determined based on a target signaling message sent by the network-side device;
the target cell group is the first, most recent, or only cell group configured with a low mobility state determining criterion and configured by the network-side device; or
the target cell group is determined based on priorities corresponding to cell groups configured by the network-side device.

7. The method for determining a low mobility state according to any one of claims 1 to 5, wherein the method further comprises:
in a case that when in an idle state, the terminal has determined that the terminal is in a low mobility state, upon entering a connected state, reporting to a network-side device that the terminal is in a low mobility state.

8. The method for determining a low mobility state according to any one of claims 1 to 5, wherein the determining, by the terminal based on the measurement result, whether the terminal is in a low mobility state comprises:
determining that the terminal is in a low mobility state in a case that a measurement result of at least one reference signal of the first serving cell satisfies a low mobility state determining criterion;
determining that the terminal is in a low mobility state in a case that measurement results of all reference signals of the first serving cell satisfy a low mobility state determining criterion; or
determining that the terminal is in a low mobility state based on an average or maximum value of measurement results of multiple reference signals of the first serving cell, wherein the multiple reference signals are synchronization signal and PBCH blocks SSB of different indexes or channel state information reference signals CSI-RS of a same type but different ports.

9. The method for determining a low mobility state according to any one of claims 1 to 5, wherein the method further comprises:
determining that the terminal is not in a low mobility state in a case that none of measurement results of all reference signals of the first serving cell satisfies a low mobility state determining criterion; or
determining that the terminal is not in a low mobility state in a case that a measurement result of at least one reference signal of the first serving cell does not satisfy a low mobility state determining criterion.

10. The method for determining a low mobility state according to claim 8 or 9, wherein the low mobility state determining criterion is a difference between a measurement reference value and the measurement result being less than or equal to a target threshold, wherein the measurement reference value is obtained based on a cell measurement result of the terminal in a connected state or a measurement reference value of the terminal in an idle state.

11. A method for determining a low mobility state, comprising:
configuring, by a network-side device, a low mobility state determining criterion for a terminal; and
receiving, by the network-side device, first indication information from the terminal, wherein the first indication information is used to indicate whether the terminal is in a low mobility state, the low mobility state is determined by the terminal based on a measurement result of a first serving cell and the low mobility state determining criterion, and the first serving cell is one of multiple serving cells configured for the terminal.

12. The method for determining a low mobility state according to claim 11, wherein in a case that a configuration manner of low mobility state determining criterion is terminal-based,
in presence of a new radio NR primary cell PCell, the first serving cell is the NR PCell; or
in absence of an NR PCell, the first serving cell is the first primary secondary cell PSCell configured by the network-side device.

13. The method for determining a low mobility state according to claim 11, wherein
in a case that a configuration manner of low mobility state determining criterion is cell group-based, the first serving cell is a primary cell PCell or primary secondary cell PSCell in a target cell group.

14. The method for determining a low mobility state according to claim 11, wherein
in a case that a configuration manner of low mobility state determining criterion is serving cell-based,
the first serving cell is the only serving cell that is configured by the network-side device and that is used for determining a low mobility state based on a cell measurement result;
the first serving cell is the first or most recent serving cell that is configured by the network-side device and that is used for determining a low mobility state based on a cell measurement result;
the first serving cell is a second serving cell in a target cell group that is configured by the network-side device and that is used for determining a low mobility state, wherein the second serving cell is the only serving cell in the target cell group, configured for determining a low mobility state based on a cell measurement result; or
the first serving cell is determined based on priorities corresponding to serving cells configured by the network-side device.

15. The method for determining a low mobility state according to claim 13 or 14, wherein
the target cell group is determined based on a target signaling message sent by the network-side device;
the target cell group is the first, most recent, or only cell group configured with a low mobility state determining criterion and configured by the network-side device; or
the target cell group is determined based on priorities corresponding to cell groups configured by the network-side device.

16. The method for determining a low mobility state according to any one of claims 11 to 14, wherein the method further comprises:
receiving, by the network-side device, second indication information from the terminal, wherein the second indication information is sent by the terminal upon entering a connected state and used to indicate that the terminal is in a low mobility state, and the low mobility state is determined by the terminal in an idle state.

17. The method for determining a low mobility state according to any one of claims 11 to 14, wherein
the terminal is in a low mobility state in a case that a measurement result of at least one reference signal of the first serving cell satisfies a low mobility state determining criterion;
the terminal is in a low mobility state in a case that measurement results of all reference signals of the first serving cell satisfy the low mobility state determining criterion;
the terminal is not in a low mobility state in a case that none of measurement results of all reference signals of the first serving cell satisfies the low mobility state determining criterion;
the terminal is not in a low mobility state in a case that a measurement result of at least one reference signal of the first serving cell does not satisfy the low mobility state determining criterion; or
the terminal is determined to be in a low mobility state based on an average or maximum value of measurement results of multiple reference signals of the first serving cell, wherein the multiple reference signals are synchronization signal and PBCH blocks SSB of different indexes or channel state information reference signals CSI-RS of a same type but different ports.

18. The method for determining a low mobility state according to claim 17, wherein the low mobility state determining criterion is a difference between a measurement reference value and the measurement result being less than or equal to a first threshold, wherein the measurement reference value is obtained based on a cell measurement result or a measurement reference value of the terminal in an idle state.

19. An apparatus for determining a low mobility state, comprising:
an obtaining module configured to: in a case that a terminal is configured with multiple serving cells, obtain a measurement result of a first serving cell, wherein the first serving cell is one of the multiple serving cells; and
a processing module configured to determine, based on the measurement result, whether the terminal is in a low mobility state.

20. An apparatus for determining a low mobility state, comprising:
a configuration module configured to configure a low mobility state determining criterion for a terminal; and
a receiving module configured to receive first indication information from the terminal, wherein the first indication information is used to indicate whether the terminal is in a low mobility state, the low mobility state is determined by the terminal based on a measurement result of a first serving cell and the low mobility state determining criterion, and the first serving cell is one of multiple serving cells configured for the terminal.

21. A terminal, comprising a processor, a memory, and a program or instructions stored in the memory and capable of running on the processor, wherein when the program or the instructions are executed by the processor, the steps of the method for determining a low mobility state according to any one of claims 1 to 10 are implemented.

22. A network-side device, comprising a processor, a memory, and a program or instructions stored in the memory and capable of running on the processor, wherein when the program or the instructions are executed by the processor, the steps of the method for determining a low mobility state according to any one of claims 11 to 18 are implemented.

23. A readable storage medium, wherein the readable storage medium stores a program or instructions, and when the program or instructions are executed by a processor, the steps of the method for determining a low mobility state according to any one of claims 1 to 10 or the method for determining a low mobility state according to any one of claims 11 to 18 are implemented.
